# EUROPEAN PATENT APPLICATION

(11) **EP 1 566 101 A1**
(43) Date of publication of application: **24.08.2005**
(21) Application number: 04388009.5
(22) Date of filing: 18.02.2004
(51) Int. Cl.: A21C 9/04, A21C 15/00

(54) **A method and an apparatus for applying and distributing particulate material on a substrate**

(71) Applicant: CABINPLANT INTERNATIONAL A/S, DK-5683 Haarby (DK)
(72) Inventor: Simonsen, Carsten Dan, 5210 Odense NV (DK)
(74) Representative: Nielsen, Henrik Sten

(57) **Abstract**

A method of applying and distributing a charge of a particulate material onto a top surface of a substrate (36), such as a pizza or lasagne batter or one or more open sandwiches, comprises providing the charge and providing a two part separator (50), a first part of which constitutes a delay line (12) having a first input and a first output, for receiving the charge through the first input, for delaying the transfer of the charge through the delay line (12) and for discharging the charge from the first output, and a second part of which constitutes a diffuser (14) having a second input and a second output, for receiving the charge from the first output of the delay line (12) through the second input and for delivering the charge after spreading the charge through the second output. The method further comprises moving the substrate (36) and the two part separator (50) relative to one another for positioning the substrate (36) below the two part separator (50) in a position in registration with the second output, delivering the charge to the first input, and moving the substrate (36) and the two part separator (50) relative to one another after the distribution of the charge onto the substrate (36) for receiving the substrate in the position below the second output of the two part separator (50).

## Description

The present invention relates to a method of applying and distributing a charge of a particulate material onto a top surface of a substrate, such as a pizza or lasagne batter or one or more open sandwiches. The present invention further relates to an apparatus for the application and distribution of the charge of the particulate material onto the top surface of the substrate, such as a pizza or lasagne batter.

Within the technique, several technical solutions for the application and distribution of a charge, such as a charge of a specific foodstuff constituent or a mixture of different foodstuff constituents are known, in particular in relation to the production of pizzas as the particulate material is applied onto a pizza batter.

An approach as to evenly distribution of particulate material onto a substrate, such as a pizza batter, is described in applicant's issued US patent US 6,531,170, to which reference is made and which US patent is also incorporated in the present specification by reference. Further examples of the prior art techniques of applying and distributing a charge of a particulate material onto a pizza batter are described in US 5,678,476 and US 6,598,519. According to the technique known from US 5,678,476, a hopper is used for the delivery of e.g. cheese to a food spreader having a plurality of movable paddles mounted within the housing of the food spreader which housing further has a porous bottom member positioned below the movable paddles and above the pizza batter onto which the cheese is to be spread. According to the technique known from US 6,598,519, the diffuser has a housing in which a rotatable axle is journalled and from which axle a set of radial paddles extend. The paddles are stated to cause the charge to be broken up and distributed over a wide area and for guiding the deposition of the particulate material, in particular cheese particles. Furthermore, downwardly extending stationary rods are provided within the housing.

Although the prior art distributor apparatuses claim to allow the particulate material, in particular the particulate cheese, to be broken up and distributed evenly, experiments which the applicant company has performed reveal that the charge when delivered to the distributor tend to block the even distribution of the material and therefore the prior art distributors based on rotatable paddles or similar radial blades or paddles have turned out not to function entirely satisfactory.

Reference is made to the above US patents which are further hereby incorporated in the present specification by reference.

The use of rotating paddles or blades for distributing particulate material, e.g. cheese, on a pizza batter, may apart from the problems of obtaining even distribution of the material which even distribution may be influenced by the blocking of the material when introduced into the distribution apparatus further involve certain problems as the mechanical impact to the material when distributed or spread by means of the rotating paddles or blades may deteriorate the particulate material and generate a chopping of the material rather than a distribution of the material. Consequently, provided the prior art rotating paddle or blade distributors are to be improved for providing an even distribution, a risk exists of deteriorating the material by simple chopping the material due to excessive mechanical impact to the particulate material.

It is an object of the present invention to provide a simple and reliable technique for the application and distribution of a particulate material onto a substrate such as a pizza or lasagne batter, e.g. the distribution of particulate foodstuff onto a pizza or lasagne batter, which technique ensures an even distribution of the particulate material onto the substrate without imposing excessive mechanical stresses or impact to the particulate material which might else cause the material to be chopped and at the same time while carrying out an efficient and gentle distribution provides a reliable and fast distribution.

It is a further advantage of the present invention that the technique of applying and evenly distributing a particulate material onto a substrate such as a pizza or lasagne batter apart from imposing a minimum impact to the particulate material causes a minimum wear to the components of the apparatus and at the same time allows the apparatus to be implemented as a simple and reliable apparatus.

The above object and the above advantage together with numerous other objects, features and advantages will be evident from the below detailed description of the presently preferred embodiment of the technique according to the present invention and in accordance with the teachings of the present invention obtained by a method of applying and distributing a charge of particulate material onto a top surface of a substrate, such as a pizza or lasagne batter, comprising:
providing the charge,
providing a two part separator, a first part of which constitutes a delay line having a first input and a first output, for receiving the charge through the first input, for delaying the transfer of the charge through the delay line and for discharging the charge from the first output, and a second part of which constitutes a diffuser having a second input and a second output, for receiving the charge from the first output of the delay line through the second input and for delivering the charge after spreading the charge through the second output,
moving the substrate and the two part separator relative to one another for positioning the substrate below the two part separator in a position in registration with the second output,
delivering the charge to the first input, and
moving the substrate and the two part separator relative to one another after the distribution of the charge onto the substrate for receiving the substrate in the position below the second output of the two part separator.

According to the teachings of the present invention, the application of a particulate material onto the substrate is established in a two step operation by means of the two part separator as the particulate material is initially delayed in its transfer through the delay line constituting the first part of the separator before the particulate material is spread by means of the diffuser constituting the second part of the separator. According to the experiments which the applicant company has performed as mentioned above, the function of the diffuser which may be implemented as a conventional rotor blade or rotor paddle distributor is improved in terms of even distribution of the particulate material by the delay of the introduction of the material into the diffuser by means of the delay line and at the same time through the improved functionality of the diffuser, the mechanical impact to the particulate material when spread by means of the diffuser is reduced as compared to a conventional rotatable blade or paddle distributor operated for optimum distribution efficiency.

It is a characteristic feature of the present invention that the delay line serves to increase the time of discharge of the charge from the first output of the delay line relative to the time for receiving the charge through the first input of the delay line by at least 25%, such as 25% - 800%. e.g. 25% - 50%, 50% - 75%, 75% - 100%, 100% - 150%, 150% - 200%, 200% - 250%, 250% - 300%, 300% - 350%, 350% - 400%, 400% - 500%, 500% - 600%, 600% - 700%, 700% - 800%, e.g. 50% - 700%, such as 300% - 500%.

According to the preferred embodiment of the method according to the present invention, the delivery of the charge to the first input is preferably carried out by means of an overhead hopper, preferably an openable hopper which delivers the charge to the first input of the separator in a precise and accurate manner.

The movement of the substrate and the two part separator relative to one another may be accomplished in any appropriate manner well known in the art per se by moving the substrate relative to the two part separator or alternatively moving the two part separator relative to the substrate.

According to a first embodiment of the method according to the present invention, the steps of moving the substrate and the two part separator relative to one another consequently include keeping the two part separator stationary and moving the substrate by means of a conveyor belt relative to the two part separator or by means of any other conveyor means, e.g. a moving table or similar apparatus.

According to an alternative embodiment of the method according to the present invention, the steps of moving the substrate and the two part separator relative to one another comprise moving the two part separator intermittently and in synchronism with the substrate by means of a conveyor belt or any similar appliance or apparatus while delivering the charge to the first input of the two part separator.

In order to improve the efficiency of the delivery and distribution of the charge of particulate material to the substrate, the method according to the present invention further advantageously comprises a step of moving the two part separator and the substrate relative to one another by approaching the two part separator and the substrate relative to one another while delivering the charge to the first input and distributing the charge onto the substrate, e.g. by lowering the two part separator onto the underlying substrate.

The above object and the above advantage together with numerous other objects, features and advantages will be evident from the below detailed description of the presently preferred embodiment of the technique according to the present invention and in accordance with the teachings of the present invention obtained by an apparatus for applying and distributing a charge of a particulate material onto a top surface of a substrate, such as a pizza or lasagne batter, comprising
a delivering means for delivering the charge,
a two part separator, a first part of which constitutes a delay line having a first input and a first output, for receiving the charge through the first input, for delaying the transfer of the charge through the delay line and for discharging the charge from the first output, and a second part of which constitutes a diffuser having a second input and a second output, for receiving the charge from the first output of the delay line through the second input and for delivering the charge after spreading the charge through the second output, and
motion generating means for moving the substrate and the two part separator relative to one another for positioning the substrate below the two part separator in a position in registration with the second output, and for removing the substrate from the position below the second output after the distribution of the charge onto the substrate.

The apparatus according to the present invention is preferably implemented in accordance with the above described features of the method according to the present invention for carrying out any of the above embodiments of the method according to the present invention. Still further, the apparatus is preferably and advantageously implemented in accordance with the below advantageous embodiments of the apparatus as the second output of the diffuser of the two part separator is preferably configurated corresponding to the outer contour of the substrate and is consequently configurated circular provided the substrate is a pizza batter and configurated rectangular provided the substrate is a lasagne batter. Provided the apparatus is used for any other application and distribution of any other charge of particulate material, in particular foodstuff material on a different kind of substrate, the second output of the diffuser of the two part separator may be differently configurated for complying with specific requirements.

According to the presently preferred embodiment of the apparatus according to the present invention, the delay line is constituted by a tubular chamber having a first axle rotatably mounted within said tubular chamber and including a plurality of blades extending radially from said first axle, said plurality of blades being positioned within said tubular chamber so as to block for the free transfer of said charge through said tubular chamber, and said diffuser having a housing and a second axle rotatably mounted within said housing and including a plurality of rods extending radially outwardly from said axle and being rotated with said axle.

The number of blades of said plurality of blades together with the rotational speed when rotating said blades influence the separation of the particulate material of the charge when the charge is transferred through the delay line. Experiments have revealed that a large number of blades of said plurality of blades increases the time of transfer of the charge through the delay line and consequently provides an excellent separation whereas the separation is deteriorated provided only a fairly low number of blades be used. Through the experiments which the applicant company has performed, it has been realised that the number of blades of said plurality of blades may vary from 4 to 12 and a number of the range 6-9 such as 6 or 7 blades conventionally provide an adequate and sufficient separation for most application purposes.

The delay line according to the above described presently preferred embodiment of an apparatus according to the present invention includes according to a specific feature of the present invention a plurality of blades which preferably constitute blades being mounted centrally on the first axle and being positioned in an orthogonal system or any other angular mutual relationship for blocking for the free transfer of the charge through the tubular chamber. The blades, which are preferably positioned horizontally, allow the individual particles of the particulate material of the charge to rest for a short period of time on the blades before falling through the tubular chamber to a lower positioned blade and finally before delivery to the second input of the diffuser. The diffuser being implemented as a rotor blade diffuser may have a separate axle or according to the presently preferred embodiment of the apparatus according to the present invention one and the same through-going axle as the delay line.

The diffuser being implemented as a rotor blade diffuser may be configurated having a different number of rotor blades or impinging pins such as a number varying from 3 to 10 and the rotor blades or the impinging pins may be configurated as rectilinear rods or curved rods as will be evident from the below detailed description of the presently preferred embodiment of the apparatus according to the present invention. The choice of number of separation blades and also diffuser blades and the choice of the specific configuration of the diffuser blades or impinging pins of the rotor blade diffuser depends on the particulate material of the charge in question and also the consistency of the particulate material which for some applications is frozen whereas for other applications, the particulate material may be non-frozen. As a general rule, the provision of a large number of impinging pins or diffuser blades improves the evenly distribution of the particulate material.

A particular aspect of the present invention relates to a sector ring assembly which is used as a separate component or an integral component of the apparatus for the application and diffusion of the charge of the particulate material according to the present invention. Provided the particulate material is e.g. frozen chopped vegetables or other frozen constituents, the collision between the frozen particulate material and the substrate such as a pizza batter, lasagne batter or open sandwiches may be a non-elastic collision and consequently, the frozen particulate material tends to be rebound from the substrate which may cause the particulate material to be reorganised and consequently, due to the impact generated by the rotor blade diffuser, be collected unevenly and non-randomly on the supporting substrate. In order to prevent the particulate material to be reorganised, a sector ring assembly is preferably used, which sector ring assembly comprises a number of radial walls connected circumferentially by an outer circumferential wall and one or more intermediate partition walls. By the provision of a sector ring assembly the walls of which are preferably of a height of 20 - 40 mm such as 25 - 35 mm, any unevenly or non-randomly reorganisation of the particular material is to any substantial extent prevented. The actual height of the walls of the sector ring assembly depend on the particulate material in question and also on the velocity of the individual particles of the particulate material when colliding with the supporting substrate and consequently of the impact force generated by the diffuser being a rotor blade diffuser or any other randomly distributing diffuser. As stated above, the sector ring assembly constitutes an advantageous component of the apparatus according to the present invention, however, it is contemplated that the sector ring assembly may be implemented in other diffuser structures and furthermore, it is contemplated that the sector ring assembly may geometrically be adapted to the geometrical configuration and size of the diffuser housing and consequently, the geometry and size of the substrate or the substrates normally being a pizza batter, a lasagne batter or one or more open sandwiches.

Dependent on the particulate material to be applied and distributed on the substrate being a pizza or lasagne batter or any other foodstuff substrate, the through-going axle of the two part separator may rotate at a speed of 100 rpm - 1000 rpm such as 200 rpm - 600 rpm, preferably 300 - 400 rpm.

The invention is now to be further described with reference to the drawings in which
Fig. 1 is a schematic, partly cutaway elevational view of a first embodiment of a distribution system for distributing two charges of particulate material such as chopped foodstuff onto underlying substrates, e.g. pizza or lasagne batter, illustrating a first step of the application and distribution of the charges,
Fig. 2 is a view similar to Fig. 1 illustrating a further step of the application and distribution of the charges,
Fig. 3 is a perspective, schematic and partly cutaway view of a prototype embodiment of an apparatus for applying and distributing a charge such as a charge of foodstuff onto the top surface of e.g. a pizza batter,
Fig. 4 is a view similar to the view of Fig. 3 of a slightly modified version of the prototype embodiment of the apparatus according to the present invention,
Fig. 5 is a perspective, schematic and partly cutaway view of a further embodiment of the apparatus according to the present invention which further embodiment is modified as compared to the embodiment shown in Figs. 3 and 4 by the adaptation of the apparatus for application and distribution of a charge of particulate material onto a rectangular substrate such as a lasagne batter, and
Fig. 6 is a top view of the further embodiment of the apparatus shown in Fig. 1.

In the below description, a technique of applying ingredients is described such as specific foodstuff constituents e.g. olives, chopped peppers, chopped tomatoes, chopped onion, chopped artichokes, chopped mushrooms, chopped ham, chopped beef, chopped pork, chopped mutton, chopped chicken, chopped turkey in fresh, boiled, roast or smoked form, chopped or cut-up fish, including fresh, roast, boiled or smoked fish parts of for example mackerel, tuna, herring, flatfish, codfish, salmon, sea trout etc. and combinations of such foodstuff ingredients onto a piece of dough in particular a batter or a paste, more particular onto a pizza batter before the baking of the batter or dough piece or alternatively onto a piece of bread or similar substrate. In particular, the below description refers to the application of constituents being foodstuffs constituents onto a pizza batter, still, it is contemplated that the technique and the apparatus and methods implementing the present invention may advantageously be used in similar applications for the application and evenly distribution of constituents onto a substrate, preferably within the field of food processing.

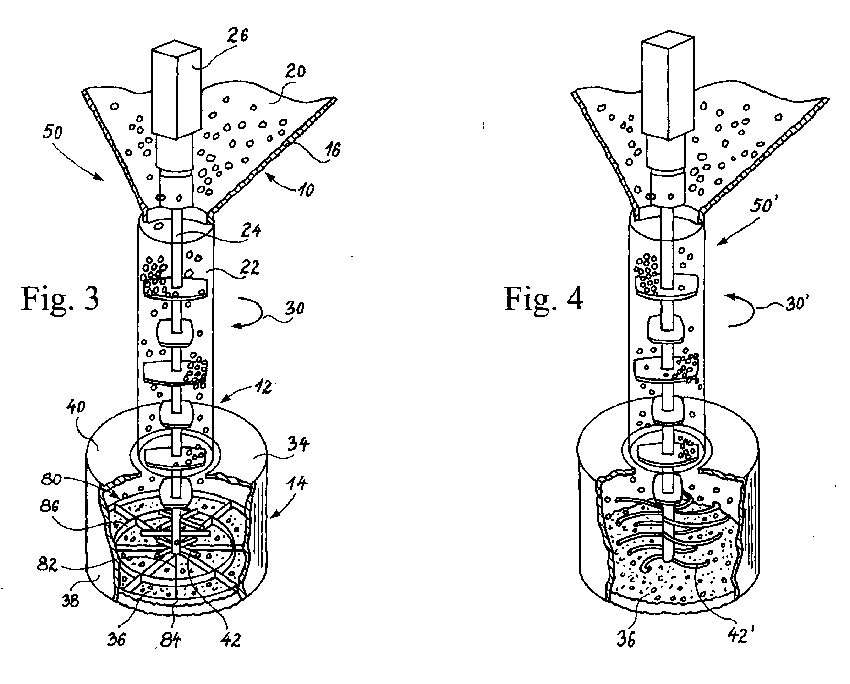

In Fig. 3, a first and presently preferred embodiment of the apparatus for the application and distribution of a charge of particulate material, in particular foodstuff, onto a substrate, in particular a pizza batter, is shown. The apparatus shown in Fig. 3 is in its entirety designated the reference numeral 50. The apparatus comprises three parts, an inlet part 10, a delay line 12 and a diffuser 14. The inlet part 10 is constituted by a conical hopper which receives a charge of particulate material illustrated as particles one of which is designated the reference numeral 20. The conical hopper 16 terminates at an upper input of a delay line 12 which delay line is configurated as a tubular chamber 22 having a circular cylindrical cross section and in which a through-.going axle 24 is mounted. The axle 24 is driven by a motor assembly 26 which motor assembly is connected to the through-going axle 24 in a fitting 28. The direction of rotation of the axle 24 is indicated by an arrow 30.

The through-going axle 24 which extends from above the input of the delay line 12 to below the output of the delay line 12 is provided with a plurality of blades 32 extending radially from the through-going axle 24 as the blades are positioned centrally of the through-going axle 24. In total, six blades 32 are provided. The blades 32 have a major dimension somewhat smaller than the inner diameter of the tubular chamber 22 for allowing the blades to rotate driven by the through-going axle 24 within the tubular chamber and a minimum dimension which is substantially smaller than the inner diameter of the tubular chamber 22 corresponding to 50% - 60% of the inner diameter of the tubular chamber 22. The blades are positioned in an orthogonal system in which the first or top blade extends in one direction perpendicular to the through-going axle 24 and the next blade extends perpendicular to the first blade and so forth. Although the blades are shown extending perpendicular to the axle 24, the blades may be configurated as V-shaped blades or simply define an angle different from 90° relative to the through-going axle 24 provided e.g. larger particles are to be applied and distributed in which case an angular position of the blades 32 may be advantageous.

Basically, the blades 32 serve to block the free transfer of particles falling through the tubular chamber 22 of the delay line 12 as the particles are to a major extent stopped and arrested on the top blade as indicated schematically in Fig. 3, whereupon the particles drop to the second blade as some of the particles simply fall freely past the rotating blades and as a result of the delaying of the free fall through the tubular chamber 22 the time of transmission of the charge of particulate material through the delay line 12 is extended providing a separation of the particulate material which is delivered from the lower output of the tubular chamber 22 to an input of the diffuser 14.

The diffuser 14 is constituted by a larger diameter cylindrical housing 34 as compared to the tubular chamber 22 and has its inner diameter configurated somewhat smaller than the outer diameter of a pizza batter 36 which is positioned at the lower output of the diffuser 14, however, circumferentially encircled by the lower rim part of the housing 34. The housing 34 is composed of an outer circular cylindrical wall 38 and a top wall 40 providing a sealed inner chamber within the housing 34 of the diffuser 14.

Within the inner chamber defined within the diffuser 14, the through-going axle 24 has at its lower end a plurality of transversal expeller rods which extend perpendicular to the through-going axle 24. Like the blades 32, the rods, one of which is designated the reference numeral 42, may be configurated differently, as is illustrated e.g. in Fig. 4 in which a plurality of rods 42' having the configuration of a segment of a sinusoidal curve are used as a substitute for the rectilinear rod 42 shown in Fig. 3. Furthermore, the rods may be differently configurated, e.g. configurated as V-shaped rods defining an angular relation with the through-going axle 24 different from the orthogonal system shown in Fig. 4. The rods 42 basically serve as expeller rods which hit the particles discharged from the delay line 12 and throws the particles randomly in different direction for causing the particles to be evenly distributed on the pizza batter 36.

It is a distinct feature of the apparatus shown in Fig. 3 that the particulate material is contacted individually with the expeller rods 42 as the charge of particulate material is delayed in its transfer through the delay line 12 and thereby the batch or charge initially input to the delay line 12 by means of the hopper 16 is caused to contact the expeller rods 42 individually rather than having the whole charge contacted with the rods which then have to serve the dual purpose of separating the charge into individual particles and also spreading the particles randomly within the diffuser chamber for providing an even distribution of the particulate material on the pizza batter 36.

According to a particular feature of the apparatus shown in Fig. 3, a sector ring assembly is provided at the lower end, i.e. the output of the diffuser 14. The sector ring assembly serves the purpose of preventing particulate material which has been randomly distributed within a diffuser to be reflected in a non-elastic or elastic collision with the substrate, i.e. for causing the particulate material to be distributed according to the pattern of impact as the particulate material is individually colliding the supporting pizza batter 36. The sector ring assembly is in its entirety designated the reference numeral 80 and comprises a number of radially extending separation walls such as 4-12 separation walls, e.g. 6 or 8 radially extending separation walls as is illustrated in Fig. 3. One of the radially extending separation walls is designated the reference numeral 82. The sector ring assembly further comprises an outer circumferential ring-shaped wall 84 and one or more intermediate circular sector ring walls subdividing the generally triangularly formed chambers defined between any two adjacent radially extending separation walls into two or more sub-chambers. In Fig. 3, a single intermediate circular sector wall is shown designated the reference numeral 86. The walls 82, 84 and 86 have a height sufficient to prevent the particulate material to be shifted from one subsection of the pizza batter 36 delimited by the sub-chamber of the sector ring assembly to another section, and consequently prevents complete reorganisation of the particulate material after the particulate material has collided with the supporting substrate which reorganisation might else cause a non randomly distribution of the particulate material.

In Fig. 4, an apparatus 50' similar to the apparatus 50 shown in Fig. 3 is illustrated, which apparatus 50' differs from the above described apparatus 50 as already discussed above as the rectilinear rods shown in Fig. 3 are substituted by curved rods 42'.

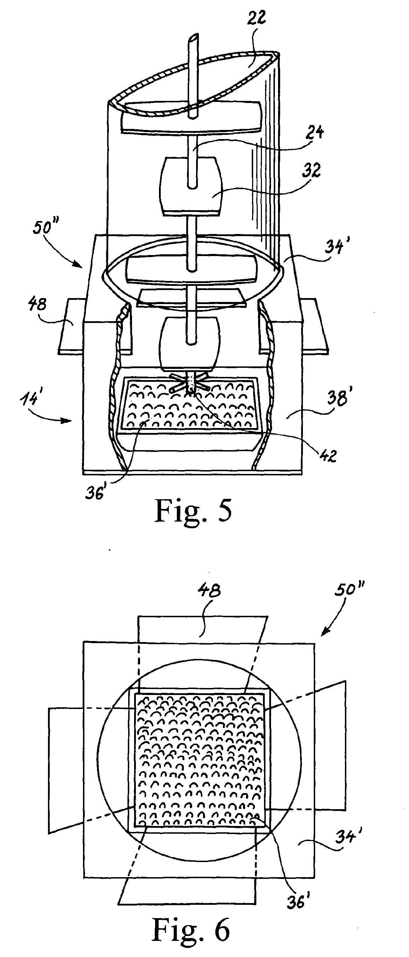

The technique of performing a two part application and distribution of a charge of particulate material of in particular foodstuff may be modified in numerous ways as already indicated above. For applying particulate foodstuff onto a substrate different from the circular substrate constituting a pizza batter 36 illustrated in Figs. 3 and 4, a lasagne batter 36' shown in Fig. 5 may be provided as the apparatus used for applying the particulate foodstuff onto the lasagne batter may be configurated having a diffuser 14' configurated in conformity with the size and dimensions of the lasagne batter 36'. In the below description, components or elements identical to components or elements described previously are designated the same reference integer whereas components or elements having the same function as components or elements previously described, however differing in shape or otherwise from the components or elements previously described are designated the same reference integer, however added a marking for indicating the geometrical or otherwise difference from the previously described component or element. In Fig. 5, the diffuser 14' is composed of an outer wall section 38' having a rectangular cross section and a rectangular top wall 40 together defining a rectangular inner chamber in conformity with a rectangular configuration of the lasagne batter 36'. Apart from the differently geometrical configuration of the diffuser 14, the apparatus 50" differs from the above described embodiments 50 and 50' shown in Figs. 3 and 4, respectively, in that guiding plates are provided, one of which is designated the reference numeral 48. A total of four guiding plates constituting diverging fins are provided.

In Fig. 6, a top view of the apparatus 50" shown in Fig. 5 is presented illustrating the guiding plates 48 in greater details. Like the expeller rods 42 shown in Figs. 3 and 5, the guiding plates 48 may be configurated in numerous ways in conformity with the size and configuration of the substrate in question and also in correspondence with the flexibility, weight, etc. of the particulate material to be evenly distributed on the substrate by means of the apparatus.

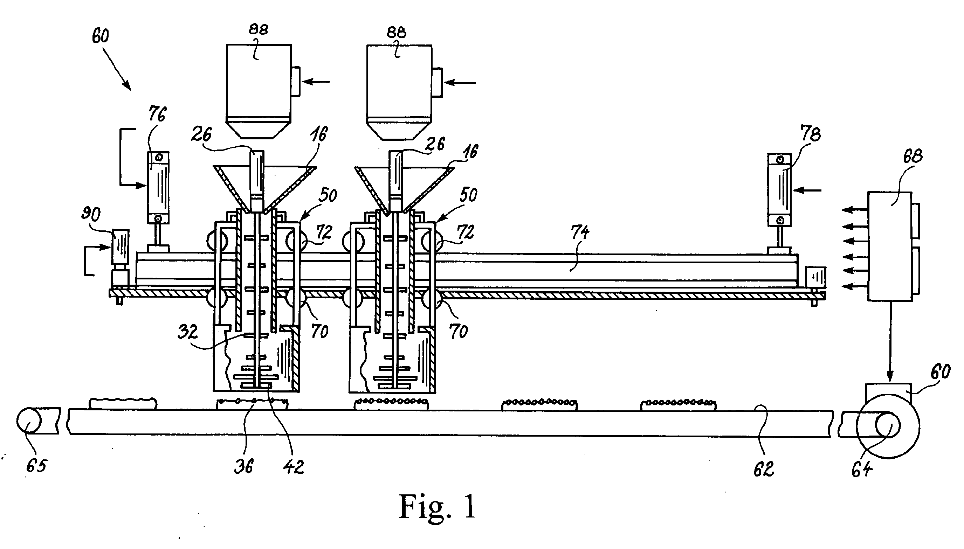

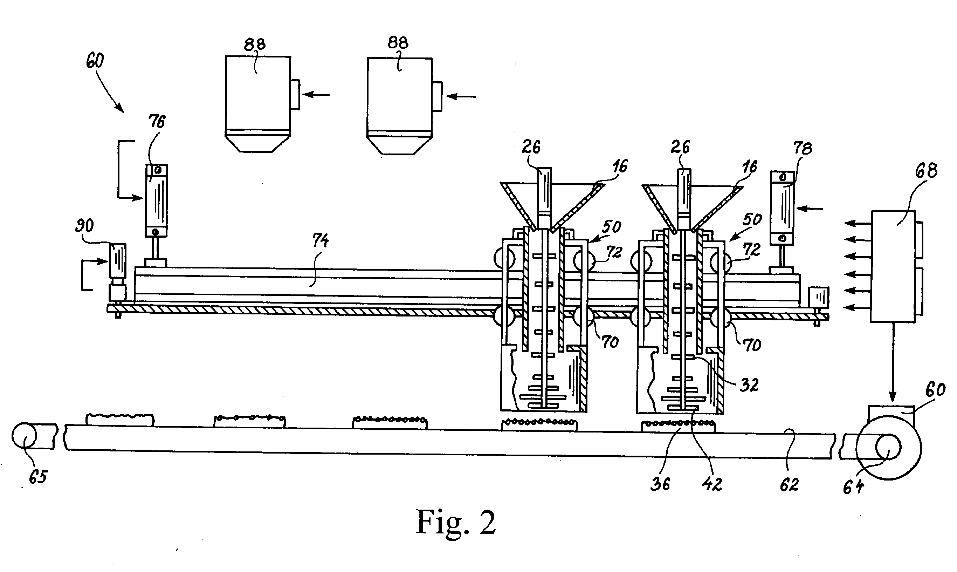

In Figs. 1 and 2, a system for the application and distribution of particulate material onto pizza batters is shown. The system is in its entirety designated the reference numeral 60, and the individual pizza batters are equidistantly positioned on a conveyor belt 62 which is moved round a drive roller 64 and an idler roller 65 powered by a motor 66 which is controlled by an overall system controller 68. A total of two apparatuses according to the present invention are shown, which apparatuses 50 are in Fig. 1 in a raised position as the individual apparatus 50 is journalled on a pair of rollers 70, 72 which rollers co-operate with a through-going rail 74. The rail 74 is suspended in a pair of vertically reciprocating pneumatic cylinders 76 and 78 which are activated from the central controller 68 for causing the assembly including the rail 74 and the two apparatuses 50 to be raised as illustrated in Fig. 1 above the pizza batters 36 positioned below the apparatuses 50 whereas in Fig. 2, the apparatuses 50 are lowered for circumferentially encircling the pizza batters 36. Apart from raising and lowering the apparatuses 50 by raising and lowering, respectively, the rail 74 by means of the pneumatic cylinders 76 and 78, the apparatuses 50 may be moved in synchronism with the underlying pizza batters 36 driven by an electric motor 90 for causing the apparatuses 50 to be moved from the left-hand position shown in Fig. 1 to the right-hand position in Fig. 2. At the same time the actuation of the pneumatic cylinders 76 and 78 causes the rail 74 and at the same time the apparatuses 50 to be lowered into contact with the top surface of the belt 62. Like the motor 60 and the pneumatic cylinders 76 and 78, the electric motor 80 is controlled by the central controller 68.

For the input of the particulate material to the inlet hopper 16 of the apparatuses 50, a total of two charge dispensers 88 are positioned above the apparatuses 50. The charge dispensers 70 are also controlled by the central controller 68 for causing the dispensing of a specific charge having a specific weight or alternatively a specific volume. No detailed description of the charge dispensers is given since the technique of dispensing a charge of particulate material is considered common knowledge with the technical field of foodstuff processing.

Although the present invention has above been described with reference to a variety of advantageous embodiments and in the context of a specific system for the application of two charges of particulate material, the invention may obviously be employed or modified in numerous ways as e.g. the conveyor belt 62 used for the transfer of the individual substrates being pizza batters, lasagne batters or any other foodstuff product may be modified from the continuously operating conveyor belt 62 described with reference to Figs. 1 and 2 into an intermittently operating conveyor belt or combined with an intermittently operating transfer table which allows the application and distribution apparatus according to the present invention to be stationary apparatus rather than an apparatus to be moved on a rail or similar supporting structure as is illustrated in Figs. 1 and 2. All embodiments or variations of the above kind which may be considered based on common technical knowledge are to be construed part of the present invention as the invention is to be interpreted in the broad scope of the pending claims.

## Claims

1. A method of applying and distributing a charge of a particulate material onto a top surface of a substrate, such as a pizza or lasagne batter or one or more open sandwiches, comprising:
providing said charge,
providing a two part separator, a first part of which constitutes a delay line having a first input and a first output, for receiving said charge through said first input, for delaying the transfer of said charge through said delay line and for discharging said charge from said first output, and a second part of which constitutes a diffuser having a second input and a second output, for receiving said charge from said first output of said delay line through said second input and for delivering said charge after spreading said charge through said second output,
moving said substrate and said two part separator relative to one another for positioning said substrate below said two part separator in a position in registration with said second output,
delivering said charge to said first input, and
moving said substrate and said two part separator relative to one another after the distribution of said charge onto said substrate for receiving said substrate in said position below said second output of said two part separator.

2. The method according to claim 1, the step of delivering said charge to said first input including delivering said charge through an overhead hopper, preferably an openable hopper.

3. The method according to any of the claims 1 or 2, said steps of moving said substrate and said two part separator relative to one another including keeping said two part separator stationary and moving said substrate by means of a conveyor belt relative to said two part separator.

4. The method according to any of the claims 1 or 2, the steps of moving said substrate and said two part separator relative to one another comprising moving said two part separator intermittently and in synchronism with said substrate by means of a conveyor belt while delivering said charge to said first input.

5. The method according to any of the claims 1-4, further comprising the step of approaching said two part separator and said substrate relative to one another while delivering said charge to said first input and distributing said charge onto said substrate.

6. The method according to any of the claims 1-5, said delay line serving to increase the time of discharging said charge from said first output relative to the time for receiving said charge through said first input by at least 25%, such as 25% - 800%. e.g. 25% - 50%, 50% - 75%, 75% - 100%, 100% - 150%, 150% - 200%, 200% - 250%, 250% - 300%, 300% - 350%, 350% - 400%, 400% - 500%, 500% - 600%, 600% - 700%, 700% - 800%, e.g. 50% - 700%, such as 300% - 500%.

7. An apparatus for applying and distributing a charge of a particulate material onto a top surface of a substrate, such as a pizza or lasagne batter, comprising
a delivering means for delivering said charge,
a two part separator, a first part of which constitutes a delay line having a first input and a first output, for receiving said charge through said first input, for delaying the transfer of said charge through said delay line and for discharging said charge from said first output, and a second part of which constitutes a diffuser having a second input and a second output, for receiving said charge from said first output of said delay line through said second input and for delivering said charge after spreading said charge through said second output, and
motion generating means for moving said substrate and said two part separator relative to one another for positioning said substrate below said two part separator in a position in registration with said second output, and for removing said substrate from said position below said second output after the distribution of said charge onto said substrate.

8. The apparatus according to claim 7, said delivery means being constituted by an overhead hopper, preferably an overhead openable hopper.

9. The apparatus according to any of the claims 7 or 8, said motion generating means comprising a conveyor belt for moving said substrate relative to said two part separator.

10. The apparatus according to claim 9, said conveyor belt being operated continuously and said motion generating means further comprising means for moving said two part separator in synchronism with said substrate while delivering said charge to said first input and distributing said charge onto said substrate.

11. The apparatus according to claim 8, said conveyor belt being moved intermittently for positioning of said substrate below said two part separator in registration with said second output and said conveyor belt being arrested while delivering said charge to said first input and carrying out said distribution of said charge onto said substrate.

12. The apparatus according to any of the claims 7-10, said second output being configurated corresponding to the outer contour of said substrate and being circular provided said substrate being a pizza batter and being rectangular provided said substrate being a lasagne batter.

13. The apparatus according to any of the claims 7-12, said delay line being constituted by a tubular chamber having a through-going first axle rotatably mounted within said tubular chamber and including a plurality of blades extending radially from said first axle, said plurality of blades being positioned within said tubular chamber so as to block for the free transfer of said charge through said tubular chamber, and said diffuser having a housing and a second axle rotatably mounted within said housing and including a plurality of rods extending radially outwardly from said axle and being rotated with said axle.

14. The apparatus according to claim 12, said first and second axles being constituted by a single through-going axle of said two part separator.

15. The apparatus according to any of the claims 7-14, further comprising a sector ring assembly, said sector ring assembly comprising a number of radial walls connected circumferentially by an outer circumferential wall and one or more intermediate partition walls.

16. The apparatus according to any of the claims 7-15, said delay line serving to increase the time of discharging said charge from said first output relative to the time for receiving said charge through said first input by at least 25%, such as 25% - 800%. e.g. 25% - 50%, 50% - 75%, 75% - 100%, 100% - 150%, 150% - 200%, 200% - 250%, 250% - 300%, 300% - 350%, 350% - 400%, 400% - 500%, 500% - 600%, 600% - 700%, 700% - 800%, e.g. 50% - 700%, such as 300% - 500%.
